# EUROPÄISCHE PATENTSCHRIFT

(11) **EP 0 490 256 B1**
(45) Veröffentlichungstag und Bekanntmachung des Hinweises auf die Patenterteilung: **12.03.1997**
(21) Anmeldenummer: 91120843.7
(22) Anmeldetag: 04.12.1991
(51) Int. Cl.: C07F 17/00, C08F 4/602

(54) **Metallocene mit bicyclischen Cyclopentadienderivaten als Liganden, Verfahren zu ihrer Herstellung und ihre Verwendung als Katalysatoren**
Metallocenes with bicyclic cyclopentadiene derivatives as ligands, process for their preparation and their use as catalysts
Métallocènes contenant des derivés cyclopentadiène bicyclique comme ligandes, procédé pour les préparer et leur utilisation comme catalyseurs

(30) Priorität: 11.12.1990 DE 4039451
(43) Veröffentlichungstag der Anmeldung: 17.06.1992
(73) Patentinhaber: HOECHST AKTIENGESELLSCHAFT, 65926 Frankfurt am Main (DE)
(72) Erfinder: Riepl, Herbert, W-8060 Dachau (DE); Herrmann, Wolfgang, Prof.Dr., W-8050 Dachau (DE); Rohrmann, Jürgen, Dr., W-6233 Kelkheim (Taunus) (DE)

(56) Entgegenhaltungen:
- EP-A- 485 821
- EP-A- 0 344 887
- EP-A- 0 420 436
- JOURNAL OF ORGANIC CHEMISTRY Bd. 39, Nr. 18, 1974, Seiten 2783 - 2787; MEYERS, A.I. ET AL: 'OXAZOLINES. X. SYNTHESIS OF .GAMMA.-
- BUTYROLACTONES'
- J. Organomet. Chem.,288(1985) 63-67
- J. Am. Chem. Soc 109, 6544-6545 1987)
- J. Organomet. Chem.,233(1982) 233-247

## Beschreibung

Die vorliegende Erfindung betrifft in erster Linie ein Verfahren zur Herstellung von Metallocenen, welche als Liganden bicyclische Derivate des Cyclopentadiens tragen. Diese Verbindungen sind zum größten Teil neu und können vorteilhaft als Katalysatoren zur Herstellung von Polyolefinen eingesetzt werden, die insbesondere durch hohe Stereospezifität, hohen Schmelzpunkt und gute Kristallinität gekennzeichnet sind. Solche Polymere eignen sich u.a. als Konstruktionswerkstoffe (Großhohlkörper, Rohre, Formteile).

In J. Org. Chem., Vol. 39, No. 18 (1974) 2783 wird die Herstellung von γ-Butyrolectonen beschrieben.

Ringsubstituierte Derivate des Zirkonocendichlorids, in denen die beiden substituierten Cyclopentadienylgruppen über eine Ethylen- oder eine Dimethylsilylenbrücke miteinander verbunden sind, können aufgrund ihrer konformativen Starrheit als Katalysatoren zur stereospezifischen Polymerisation von Propen benutzt werden. Art und Anordnung der Substituenten beeinflussen die Polymerisationsgeschwindigkeit, die mittlere Molmasse und die Isotaktizität (Chem. Lett. 1989, S. 1853-1856 bzw. EP-A 0 316 155).

Von den bicyclischen Derivaten des Cyclopentadiens besitzen (substituierte) Indenylreste als Liganden für Metallocene (Polymerisationskatalysatoren) Bedeutung. So ist z.B. die Herstellung von isotaktischem Polypropylen mit Hilfe des Katalysatorsystems Ethylen-bis(4,5,6,7-tetrahydro-1-indenyl)zirkondichlorid/Aluminoxan beschrieben (EP-A 185 918).

Verbrückte Metallocene, die als Liganden bicyclische Derivate des Cyclopentadiens tragen, wobei der Cyclopentadienylteil zusätzlich substituiert sein kann, lassen interessante Eigenschaften erwarten und sollten das Eigenschaftsspektrum der herstellbaren Polymere beträchtlich erweitern können. Eine Verwendung solcher Katalysatoren scheiterte bislang daran, daß keine praktikable Synthesemethode für solche Komplexe, die insbesondere in 2-Stellung am Cyclopentadienylteil substituiert sind, zur Verfügung stand.

Die vorliegende Erfindung betrifft daher ein Verfahren zur Herstellung einer Verbindung der Formel XI 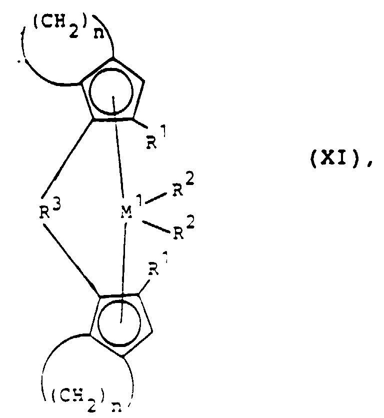 worin
M¹ ein Metall aus der Gruppe Titan, Zirkon, Hafnium, Vanadin, Niob und Tantal ist,
die Reste R¹ gleich oder verschieden sind und Wasserstoff, eine C₁-C₁₀-Alkylgruppe, eine C₆-C₁₀-Arylgruppe, eine C7-C15-Arylalkylgruppe oder eine C₂-C₁₀-Alkenylgruppe bedeuten,
die Reste R² gleich oder verschieden sind und eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C7-C40-Alkylarylgruppe, eine C₈-C₄₀-Arylalkenylgruppe oder ein Halogenatom bedeuten,
R³ 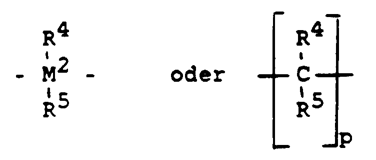 ist,
wobei M² Silizium, Germanium oder Zinn bedeutet,
R⁴ und R⁵ gleich oder verschieden sind und ein Wasserstoffatom, ein Halogenatom, eine C₁-C₁₀-Alkylgruppe, eine C₆-C₁₀-Arylgruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder
R⁴ und R⁵ zusammen mit dem sie verbindenden Atom einen Ring bilden, p 1,2 oder 3 bedeutet und
n für eine ganze Zahl von 2-18 steht,
dadurch gekennzeichnet, daß man eine Verbindung der Formel II 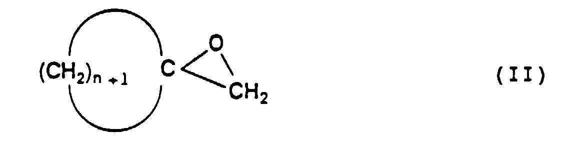 mit einem Alkali- oder Erdalkalisalz eines Malonsäureesters umsetzt, die gebildete Zwischenstufe ohne Isolierung mit einer Verbindung R¹-X zur Reaktion bringt, wobei R¹ die genannte Bedeutung besitzt und X für eine nucleophile Abgangsgruppe steht, das Reaktionsprodukt durch Decarboxylierung in ein Lacton der Formel IV überführt 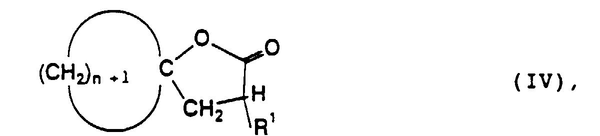 welches nach Umlagerung zum entsprechenden Enon nach bekannten Methoden zur Verbindung der Formel XI weiter umgesetzt wird.

In Formel XI gilt bevorzugt, daß M¹ Titan, Zirkon oder Hafnium bedeutet, die Reste R¹ gleich sind und eine C₁-C₄-Alkylgruppe bedeuten, die Reste R² gleich sind und Halogen oder eine C₁-C₄-Alkylgruppe bedeuten, M² für Silizium steht, R⁴ und R⁵ gleich oder verschieden sind und Wasserstoff oder eine C₁-C₄-Alkylgruppe bedeuten, p = 1 oder 2 ist und n für eine ganze Zahl von 4-7 steht.

Insbesondere gilt, daß M¹ Zirkon ist, die Reste R¹ gleich sind und Methyl oder Ethyl bedeuten, die Reste R² gleich sind und Chlor oder Methyl bedeuten, M² für Silizium steht, R⁴ und R⁵ Wasserstoff oder Methyl bedeuten, p = 2 ist und n für eine ganze Zahl von 4-7 steht.

Gegenstand der vorliegenden Erfindung sind ferner die Verbindungen der Formel XI einschließlich der genannten Vorzugsbereiche, wobei die Verbindungen mit n = 4 ausgenommen sind. Bevorzugt ist n somit eine Zahl von 5-7.

Die Herstellung der Verbindungen XI wird durch die nachfolgenden Reaktionsschemata 1 und 2 exemplarisch verdeutlicht: 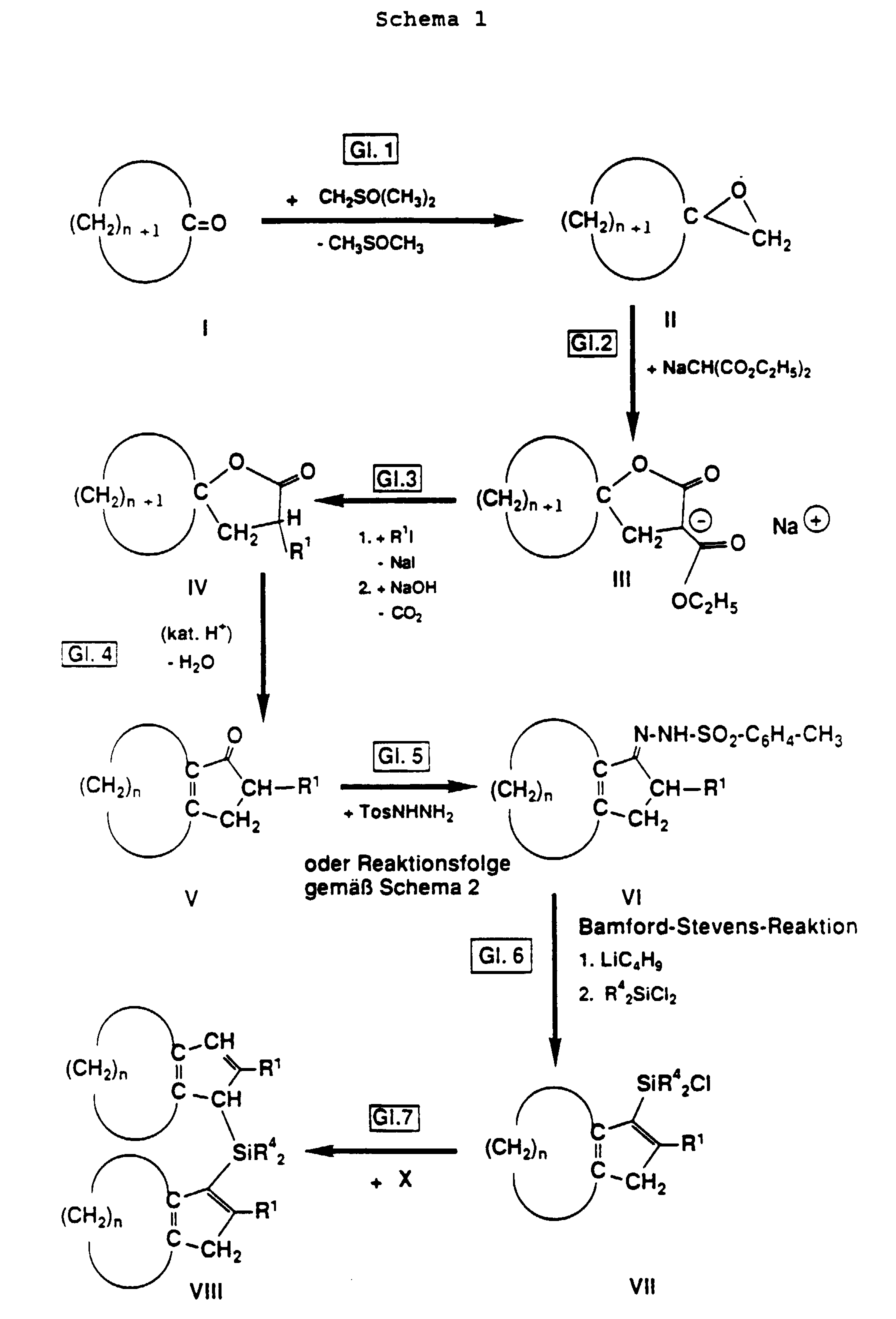 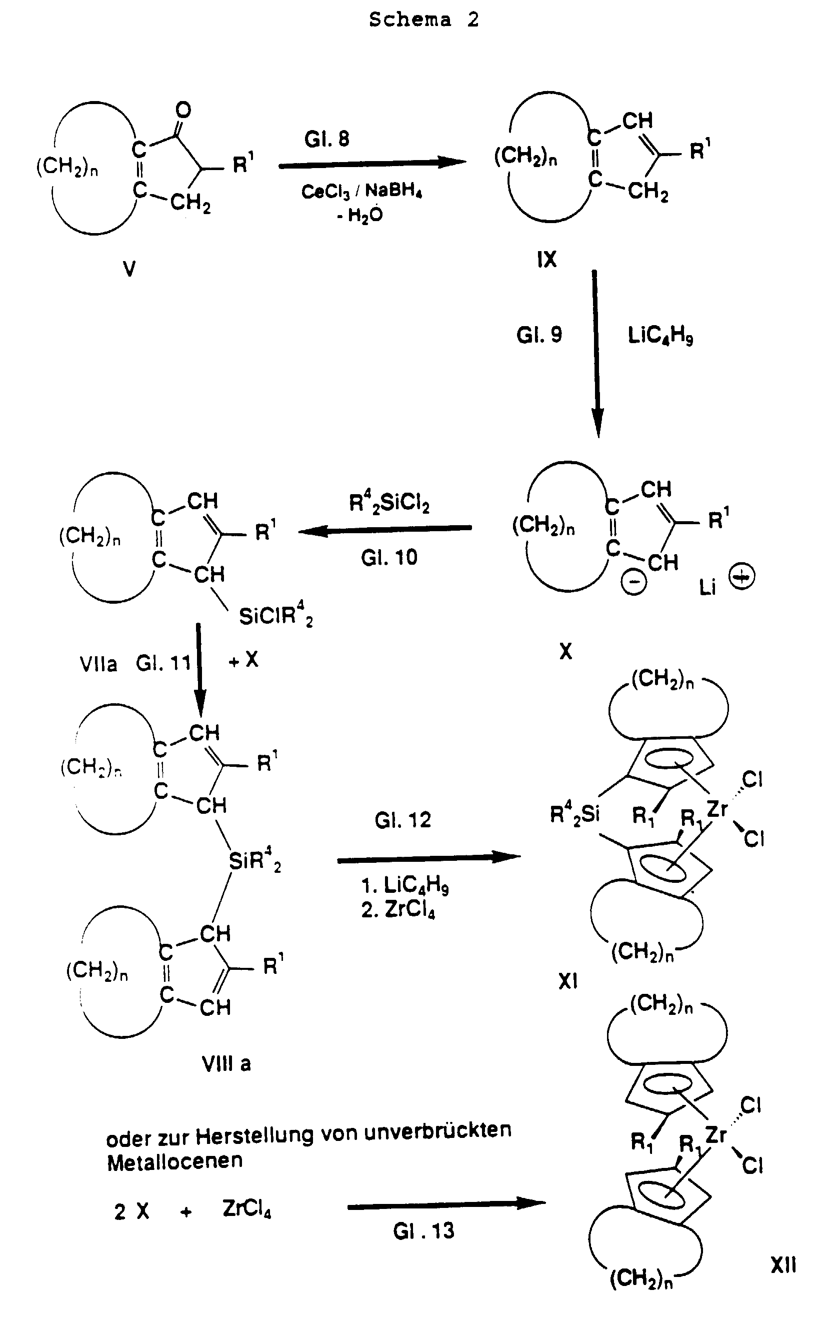 Gemäß Schema 1 werden als Ausgangsprodukte cyclische Ketone I wie z.B. Cycloheptanon oder Cyclooctanon (n = 5, 6) verwendet. In einem ersten, auf große Ansätze anwendbaren Schritt wird dieses Keton z.B. mit Trimethyloxosulfuran in das Epoxid II überführt (Gl. 1).
Der sich daran anschließende zentrale Schritt in der Synthese der Verbindungen XI, der auch gleichzeitig das Problem der Einführung des Substituenten R¹ in α-Stellung zur Brücke R³ löst (Substitution in 2-Stellung am späteren Cyclopentadienylteil), besteht darin, daß das Epoxid mit dem Anion eines Malonsäureesters geöffnet wird (Gl. 2). Dies geschieht durch Reaktion des Epoxids II mit einem Alkali- oder Erdalkalisalz eines Alkyl-, Aryl- oder Alkenyl-, bevorzugt (C₁-C₁₀)-Alkyl-, insbesondere (C₁-C₄)-Alkyl-esters der Malonsäure. Besonders bevorzugt sind die Malonsäuredi-(C₁-C₄)alkylester und von diesen der Malonsäurediethylester. Diese Ester werden vorzugsweise in Form ihres Natriumsalzes eingesetzt.

Als erstes Produkt fällt dabei eine salzartige Masse der vermutlichen Konstitution III an. Sie wird ohne Isolierung mit einer Verbindung R¹X umgesetzt, wobei X eine Abgangsgruppe wie Halogen, bevorzugt Brom, Jod, oder Tosyl bedeutet. Die Aufarbeitung im alkalischen Medium und anschließende Destillation führt zu einer Decarboxylierung (Gl. 3).

Das somit erhaltene Lacton IV kann - nach bekannten Methoden - durch Rühren in sauren Medien (z.B. Polyphosphorsäure/P₂O₅ oder Methansulfonsäure/P₂O₅) zur Umlagerung in ein Enon V gebracht werden, welches das Ausgangsprodukt der Diensynthese ist (Gl. 4). Dieser Schritt konnte soweit optimiert werden, daß er das Enon in 92 % Ausbeute liefert. Vorteilhaft ist die Tatsache, daß die Umsetzung (bevorzugt Alkylierung) des Lactonat-Ions gemäß Gl. 3 nahezu quantitativ verläuft, womit aufwendige destillative Trennoperationen entfallen. Angesichts der thermischen Empfindlichkeit des Enons ist dies ein wichtiges Detail.

In klassischer Weise kann V durch Reduktionsmittel wie Natriumboranat in Gegenwart von Cer(III)-chlorid oder Lithiumaluminiumhydrid reduziert werden. Der entsprechende Allylalkohol wird aber nicht isoliert, sondern direkt ein Gemisch der drei stellungsisomeren Cyclopentadien-Derivate IX erhalten (Gl. 8, Schema 2).

Die literaturbekannte Umsetzung des Diens IX mit einer Verbindung M³-R (M³ = Alkalimetall, R = Alkyl oder Wasserstoff; hier z.B. Butyllithium, Gl. 9) und anschließender Einführung der Brücke R³ (in Form einer Verbindung X-R³-X mit X = Cl, Br oder Tosyl; hier z.B. R⁴₂SiCl₂, Gl. 10) führt zu der Verbindung der Formel VIIa.

Ist das andere Doppelbindungsisomer VII gewünscht, so ist dies nach der "Bamford-Stevens-Methode" z.B. über das Tosylhydrazon VI zugänglich (Gl. 5 und 6).

Die Umsetzung der Isomeren VII/VIIa mit dem Alkalisalz X, bevorzugt Lithiumsalz, liefert in guten Ausbeuten das Ligandsystem VIII/VIIIa (Gl. 7 und 11).
Die Darstellung der Metallkomplexe XI erfolgt durch Deprotonierung des Cyclopentadiensystems VIII/VIIIa mit einer Verbindung vom Typ M³-R (siehe oben; bevorzugt Butyllithium) und Umsetzung des so erhaltenen Dilithiosalzes mit einer Verbindung der Formel M¹X₄ (X = Halogen, bevorzugt Chlor, insbesondere Zirkoniumtetrachlorid) in geeigneten Lösemitteln (z.B. Dimethoxyethan, Gl. 12).
Das resultierende Reaktionsprodukt XI ist ein Gemisch der rac- und meso-Komplexe.
Unverbrückte Metallkomplexe des Typs XII sind durch Umsetzung der Lithiumsalze X mit M¹X₄ erhältlich (Gl. 13).

Mit Ausnahme der Schritte entsprechend der Gl. 2 und 3 ist die aufgeführte Reaktionssequenz auch hinsichtlich der Parameter Lösemittel, Temperaturen und Reaktionszeiten bekannt; vgl. Experientia 11 (1955) 114-115; J. Chem. Soc. Chem. Commun. 1978, 601-602; Tetrahedron Lett. 1977, 159-162; C.R. Acad. Sci. Paris 267 (1968) 467-470 und die Ausführungsbeispiele.

Die chiralen Metallocene werden als Racemat zur Herstellung von hochisotaktischen Poly-1-olefinen eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann.

Die Trennung der Stereoisomeren ist im Prinzip bekannt.

Erfindungsgemäß wird als Cokatalysator ein Aluminoxan der Formel 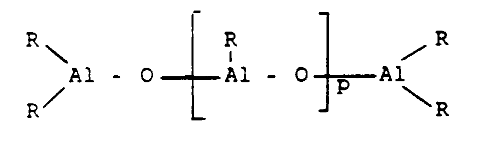 für den linearen Typ und/oder der Formel 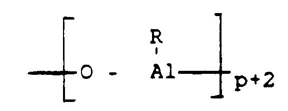 für den cyclischen Typ verwendet, wobei in den Formeln die Reste R gleich oder verschieden sein können und eine C₁-C₆-Alkylgruppe, eine C₆-C₁₈-Arylgruppe oder Wasserstoff bedeuten, und p eine ganze Zahl von 2 bis 50, bevorzugt 10 bis 35 bedeutet.

Bevorzugt sind die Reste R gleich und bedeuten Methyl, Isobutyl, Phenyl oder Benzyl, besonders bevorzugt Methyl.

Sind die Reste R unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429-430 und EP-A 302 424).

Die genaue Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1,2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004 und die Herstellungsbeispiele E und F). Zur Entfernung von im Propylen vorhandener Katalysatorgifte ist eine Reinigung mit einem Aluminiumalkyl, beispielsweise AlMe₃ oder AlEt₃ vorteilhaft. Diese Reinigung kann sowohl im Polymerisationssystem selbst erfolgen, oder das Propylen wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von 0 bis 150 °C, vorzugsweise 30 bis 80 °C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 C-Atomen.

R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere wird Propylen und Ethylen polymerisiert.

Als Molmassenregler wird, falls erforderlich, Wassertoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von 10⁻³ bis 10⁻⁸, vorzugweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die erfindungsgemäßen Metallocene im technisch interessanten Temperaturbereich zwischen 30 und 80 °C Polymere mit hoher Molmasse, hoher Stereospezifität, enger Molmassendispersität und insbesondere einem hohen Schmelzpunkt, gleichbedeutend mit hoher Kristallinität und hoher Härte, erzeugen.

Die nachfolgenden Beispiele sollen die Erfindung näher erläutern.

Beispielhaft für alle Ketone I (CH₂)ₙ₊₁CO wird die Reaktionssequenz ausgehend von Cycloheptanon (n = 5) und Cyclooctanon (n = 6) mit R¹ = CH₃ und R⁴ = R⁵ = CH₃ beschrieben.

Soweit nicht anders angegeben, wurde unter Stickstoffatmosphäre (Schutzgas) gearbeitet.

### 1. Darstellung der Lactone IV.

In 550 g absolutem Ethanol werden 16,5 g (0,71 mol) Natrium aufgelöst. In die handwarme Lösung werden 113,6 g (0,71 mol) Malonsäurediethylester zugetropft. Nach einiger Zeit bildet sich ein schwammiger Niederschlag, der aus dem Natriumsalz des Malonesters besteht. Bei Raumtemperatur werden dann 0,70 mol des Epoxids II zugetropft. Nach vollständiger Zugabe wird 6 h unter Rückfluß erhitzt. Nach den ersten zwei Stunden beginnt die Masse fest zu werden, so daß mit einem Rührwerk durchmischt werden muß. Danach wird noch 2 Stunden bei 50 °C gerührt, dann werden bei Raumtemperatur 85 g (0,75 mol) Methyliodid zugetropft. Die Mischung wird über Nacht gerührt und am nächsten Tag noch 2 h aufgekocht. Der Rückflußkühler wird gegen eine Destillierbrücke ausgetauscht und das Ethanol größtenteils abdestilliert. Wegen der harten Konsistenz der Masse unterstützt man das Abdestillieren gegen Ende durch Anlegen eines leichten Vakuums, da stärkeres Erhitzen nicht zum Ziel führt. Die Masse aus Natriumiodid und dem Ester wird mit 280 ml 25%iger Natronlauge solange gekocht, bis sich ein schweres Öl abzuscheiden beginnt. Unter ständiger gaschromatographischer Kontrolle wird das Reaktionsgemisch noch 1 h bei 70-80 °C belassen. Dabei gehen auch Feststoffreste noch in Lösung. Das Öl wird im Scheidetrichter abgetrennt und zuletzt im Vakuum destilliert.

Lacton IV (n = 5):
C₁₁H₁₈O₂; C: ber. 72,5 gef. 72,9 H: ber. 9,8 gef. 9,9 Sdp. 112 °C (2 Torr), 90 % d. Theorie
¹H-NMR (100 MHz, CDCl₃, 25 °C): 1,08, 1,09, D (J = 6,9 Hz) 3 H; 1,43, 1,39, "D", 12H; 2,58, 2,47, 2,3, 2,25, 2,08, 1,87, "M", 4H
¹³C-NMR (100 MHz, CDCl₃, 25 °C, (DEPT: -CH₃, -CH:+, -CH₂-): 178,8(O) C=O, 87,02(O) quart. C, 39,51(+)CH, 15,09(+)CH₃, 46,1, 42,45, 39,95, 37,58, 28,66, 21,8, 21,42(-)CH₂
IR Spektrometrie: 2292 cm⁻¹ s, 2863 m, 1768 vs, 1458 m, 1378 m, 1312 w, 1284 w, 1237 m, 1175 m, 1152 m, 1030 m, 1006 m, 987 m, 936 m-s
Lacton IV (n = 6):
Sdp. 166 °C (10 mm), 82 % d. Th.
¹H-NMR: 1,07, 1,09, D (J=7,2 Hz) 3H; 1,39 "S" 14H; 2,61, 2,51, 2,45, 2,38, 2,3, 2,19, 2,09, "M" 4H
¹³C-NMR: 178,0(O) C=O, 87,8(O) quart. C, 16,3(+)CH₃, 46,5(+)CH

### 2. Umlagerung der Lactone IV zu den Enonen V:

150 ml technische Methansulfonsäure (99 %) werden mit 18 g (0,48 mol) Phosphorpentoxid 15 min intensiv gerührt. Man geht dabei so vor, daß man das Phosphorpentoxid in kleinen Anteilen zusetzt. Dann wird 0,27 mol Lacton IV zugetropft. Die Reaktion springt unter Selbsterwärmung an und behält ca. zwei Stunden eine Temperatur von 70 °C. Zur Vervollständigung der Reaktion läßt man noch zwei Stunden in einem Ölbad von 60 °C stehen. Die Schmelze ist jetzt tiefrot und fluoresziert im aufscheinenden Sonnenlicht leicht. Zur Aufarbeitung gießt man sie in 17 %ige Natriumcarbonatlösung (aus insgesamt 600 g Na₂CO₃) mit Eis. Die hellgelbe Emulsion wird mit Ether dreimal extrahiert, die vereinigten organischen Phasen mit Natriumsulfat getrocknet und am Rotationsverdampfer eingezogen. Das verbleibende Öl wird im Vakuum bei möglichst niedriger Temperatur und über eine kurze Brücke destilliert.

Enon V (n = 5):
Sdp: 105 °C (1 mm), 93 % d. Th.
¹H-NMR (100 MHz, CDCl₃) 0,77, 0,87, D (J=7,25 Hz) 3H; 1,3, 2,1 "M" 13H;
¹³C-NMR (100 MHz, CDCl₃) 210(o) C=O, 173 (o) C=C, 161,2 (o) C=C, 15,2(+)CH₃, 34,2(+)CH, 39,9, 39,5, 37,8, 28,6, 28,4(-)CH₂
Enon V (n = 6):
Sdp: nur unter Zersetzung, 89 % d. Th.
¹H-NMR (400 MHz, CDCl₃) 1,03, 0,96, D (J=7,1 Hz) 3H; 1,31, 1,63, "D" 12H; 2,37, 2,31, 2,2, 2,09, "M" 3H;
¹³C-NMR (100 MHz, CDCl₃): 211(o) C=O, 173,1(o) C=C, 138,8(o) C=C, 16,5 (+) CH₃, 39,5 (+) CH, 29,8, 28,25, 25,6, 25,4, 22,02, 22,0, 19,8, (-)CH₂;

Die Tosylhydrazone VI der beiden Verbindungen wurden nach üblichen Methoden durch einstündiges Rückflußkochen mit Tosylhydrazin in Ethanol gewonnen, mit anschließender Umkristallisation.

¹³C-NMR: 198, C=N; 170,4, C=C, 135,24, C=C; 155,5, 143,4, 129,1, 127,9, Ph; 42,1, CH; 17,62, CH-CH₃; 21,85, Ph-CH₃; 32,1, 23,38, 27,7, 26,08, 25,79, 21,4, CH₂;

### 3. Darstellung der Chlordimethylsilyl-2-methyl-bicyclodiene VII

10 mmol des umkristallisierten Tosylhydrazons VI eines der beiden Enone werden in 40 ml wasserfreiem Dimethoxyethan (DME) gelöst und auf -50 °C gekühlt. Dazu wird mittels einer Kapillare 15 ml (1,6 m, 24 mmol) ebenfalls so kaltes Butyllithium zugetropft (17 % Überschuß). Nach ungefähr der Hälfte der Menge ergibt sich ein fast spontaner Farbumschlag nach tiefrot, während sich vorher jeder Tropfen BuLi nur mit wenigen rötlichen Schlieren löste, die sich wieder entfärbten. Es wird dann 45 min bei dieser Temperatur gerührt. Sodann setzt man dem Schlenkrohr ein Überdruckventil auf und plaziert es in ein Kühlbad von -10 ° - 5 °C. Es setzt kurz darauf Gasentwicklung ein und Entfärbung zu einer eher gelblichen Flüssigkeit. Dies kann durch Sonnenlicht sehr beschleunigt werden. Nach Beendigung der Gasentwicklung zieht man das Lösungsmittel ab und wäscht den grünlichen Niederschlag zweimal mit Hexan, um überschüssiges BuLi zu entfernen. Dieses sehr empfindliche Salz wird wieder mit 15 ml DME aufgenommen und bei -20 °C mit einem großen Überschuß frisch destilliertem Dimethyldichlorsilan versetzt. Man läßt langsam auf Raumtemperatur erwärmen und zieht das Lösungsmittel ab. Dabei scheidet sich bald Lithiumchlorid ab, diese Masse wird mit Methylenchlorid extrahiert und filtriert. Das Filtrat wird zur Trockene eingezogen (gelbes, an der Luft bald sich blau färbendes Öl). Zur weiteren Reinigung wird dieses Öl im Kugelrohr destilliert. Man arbeitet so, daß man zwischen Vorlage und Destillierkugel eine mit Raschigringen gefüllte Kugel schaltet, die man ebenfalls im Ofen unterbringt. Bei niedrigerer Temperatur wird zunächst alles in diese Kugel destilliert, dann steigert man die Temperatur, um die Flüssigkeit in die Vorlage zu bringen.

VIIa (n = 5):
¹H-NMR (100 MHz, CDCl₃, 25 °C): 6,07, S, 1H; 3,27, "S", 2H; 2,44, 1,66, "M", 10H; 2,1, S, 3H; 0,09, S, 6H
¹³C-NMR (400 MHz, CDCl₃, 25 °C) 144,1, 139,7, 138,8, 135,6, 55,73, 32,8, 31,5, 30,15, 27,75, 27,6, 17,6, -0,2.

### 4. Darstellung der Bicyclodiene IX

0,1 mol des Enons V werden in 50 ml Methanol gelöst. 23,8 g CeCl₃ · 7H₂O (0,1 mol) werden in 70 ml Methanol unter kräftigem Rühren und leichtem erwärmen gelöst. Beide Lösungen werden in einem großen Kolben vereinigt und auf Eis gestellt. Protionsweise gibt man jetzt 3,7 g (0,1 mol) Natriumboranat zu. Zwischen den einzelnen Gaben sollen gut 5 min vergehen. Die Suspension entwickelt kräftig Gas und schäumt sehr stark. Eine halbe Stunde nach der letzten Zugabe erhitzt man 2 h auf 50 °C. Man kontrolliert gaschromatographisch auf Vorhandensein von Enon. Ist dies nicht der Fall setzt man tropfenweise konz. HCl zu, um noch vorhandenes Natriumboranat zu zerstören. Es soll eine deutlich saure Reaktion auftreten. Dann zieht man die Emulsion im Rotationsverdampfer bei leichtem Vakuum zur Trockene ein. Diese Masse wird mit Ether in der Weise extrahiert, daß man in einem Erlenmeyerkolben 20 min kräftig rührt. Nach der vierten Extraktion kontrolliert man die organische Phase auf noch vorhandenes Dien. Die vereinigten organischen Phasen werden mit Natriumsulfat getrocknet und zuerst bei Normaldruck, nach Entfernung des Ethers im Vakuum bei 10 Torr destilliert.
IX (n = 5): Diengemisch
Sdp: 81 °C (2 mm)
IR: 3137 cm⁻¹w, 1639 w, 1444 s, 1376 m, 1279 w, 1227 w, 1205 w, 1182 w, 1147 w, 1090 w-m, 982 w, 959 m-w, 902 m-w, 885 w, 868 w, 811 w

### 5. Darstellung der Lithiumsalze X und Umsetzung zu den Chlordimethylsilylderivaten VII

0,1 mol des Diengemisches IX werden in 100 ml trockenem Hexan gelöst und auf 10 °C abgekühlt. Dazu pumpt man mittels einer Kanüle 69 ml einer 1,6 molaren Lösung von Butyllithium im Verlaufe einer halben Stunde. Die zunächst farblose Lösung wird trübe und scheidet dann einen sehr flockigen weißen Feststoff aus. Nach 3 h Rühren bei Raumtemperatur erhitzt man noch 1 h zum Rückfluß, wobei der Niederschlag gröber wird. Man saugt ihn jetzt über eine Fritte Nr. 3 ab. Durch mehrmaliges Waschen mit Hexan unter vollständigem Suspendieren wird er von überschüssigem BuLi befreit. Anschließend wird er am Hochvakuum bis zur staubigen Konsistenz getrocknet.
Ausbeute: 79 %

Zur Darstellung der Chlordimethylsilylderivate VII suspendiert man das Lithiumsalz in 50 ml THF und pumpt es zu einer Lösung von 35 ml frisch destilliertem Dichlordimethylsilan in ebensoviel THF. Die Suspension löst sich augenblicklich auf. Gelegentliches Kühlen mit Eis hält die Flüssigkeit auf Raumtemperatur. Man rührt noch 1 h und zieht das Lösungsmittel vollständig ab. Die verbleibende teilweise kristalline Masse wird mit 4 x 30 ml Methylenchlorid extrahiert. Das nach dem Abziehen des Lösungsmittels verbleibende Öl wird wie unter 3. im Kugelrohr destilliert.

### 6. Darstellung der Bis-dienyl-dimethylsilylderivate VIII.

Es werden äquimolare Mengen von Lithiumsalz X und Chlordimethylsilylderivat VII in Toluol suspendiert und solange am Rückfluß gekocht, bis sich gaschromatographisch kein Chlordimethylsilyldien VII mehr nachweisen läßt: 3 h bei 20 mmol. Man erkennt das Ende der Umsetzung daran, daß der weiße Feststoff nicht mehr sedimentiert; sehr fein verteiltes Lithiumchlorid. Die Lösung wird davon durch tauchfiltrieren mit einer Kapillare, der ein sehr engporiges Filter vorgeschraubt ist, getrennt, und eingedampft.
Ausbeute: 89 %

### 7. Darstellung der Zirkoniumkomplexe XI

### Darstellung des Zirkoniumkomplexes mit dem Brückenliganden VIIIa (n = 5)

3,64 g (10 mmol) des Brückenliganden VIIIa werden in 50 ml Ether gelöst und bei 0 °C mit 14 ml 1,7 m BuLi versetzt. Diese Lösung wird bei Raumtemperatur 1 h gerührt, dann die Lösungsmittel vollständig abgezogen. Das verbleibende Öl wird eine weitere Stunde gerührt. Danach nimmt man es in 40 ml DME auf und kühlt auf -45 °C. Diese teils trübe Lösung pumpt man zu einer ebensokalten Lösung von 2,32 g ZrCl₄ in 40 ml DME, die durchaus wieder ausgeschiedene Nadeln von ZrCl₄ enthalten darf. Man läßt im Verlauf von 2 h auf Raumtemperatur erwärmen und erhält eine klare Lösung. Diese wird über Nacht gerührt und scheidet dabei einen weißen Niederschlag aus. Die Lösung wird jetzt noch 3 h bei 80 °C gehalten. Der feine weiße Niederschlag verklumpt dabei zusehens, und ein Öl scheidet sich aus. Die überstehende Lösung wird abgegossen, das Öl in Methylenchlorid gelöst und mittels einer Kapillarfritte von unlöslichem LiCl abfiltriert. Die verbleibende Lösung wird zur Sättigung eingezogen und mit Hexan überschichtet und in der Gefriertruhe bis zur Kristallisation aufbewahrt. Man erhält den Komplex als rac-/meso-Mischung (1:1) in Form eines gelben Pulvers.
Ausbeute: 40 % d. Th.
¹H-NMR (100 MHz, CDCl₃, 25 °C): 6,08 S 2H, 2,44 S 6H, 1,78, 1,57, 1,3, 0,93 "M" 10H, 0,69 "T" 6H
¹³C-NMR (100 MHz, CDCl₃, 25 °C) 121,73, 128,4, 136,1, 137,32, 139,27, 32,74, 31,79, 28,82, 26,8, 26,65, 17,88, 13,8

### 8. Darstellung der Zirkoniumkomplexe XII

Darstellung des Zirkoniumkomplexes aus dem Cyclopentadienen IX (n = 5).

Unter Stickstoffatmosphäre werden 466 mg (2 mmol) frisch sublimiertes ZrCl₄ in 30 ml Dimethoxyethan (DME), das auf -10 °C gekühlt ist, gelöst. Nach 20 min Rühren, wobei sich das Zirkoniumchlorid auflöst, wird auf -40 °C gekühlt und eine ebensokalte Suspension von 612 mg (4 mmol) Lithiumcyclopentadien X in DME dazu gepumpt. Man läßt über einen Zeitraum von 1-2 h auf Raumtemperatur erwärmen und rührt noch über Nacht. Dabei lösen sich alle Feststoffe auf. Schließlich wird 3 h am Rückfluß erhitzt, wobei sich ein feiner Niederschlag von Lithiumchlorid bildet. Die abdekantierte Lösung wird vollständig eingezogen und dann mit 30 ml Methylenchlorid digeriert. Nach 10 min Rühren setzt man 10 ml konz. HCl zu und rührt noch 20 min. Der Methylenchlorid-Überstand wird im Scheidetrichter abgehoben, die wäßrige Phase nochmals mit Methylenchlorid extrahiert, die vereinigten organischen Phasen werden mit Natriumsulfat getrocknet und zur Trockene eingezogen. Die verbleibende Kristallmasse löst man mit Methylenchloird 14 ml : Benzol 6 ml eben auf und erwärmt kurz auf Siedetemperatur. Beim Abkühlen fallen feine, leicht zitronengelbe Nadeln aus.
Smp.: 236 °C, Ausbeute: 63 % d. Th.
¹H-NMR (100 MHz, CDCl₃, 25 °C), 5,94 S 2H, 2,56 "T" 4H, 2,08, 1,92, 1,8, 1,52, 1,21 "M" 6H
¹³C-NMR (100 MHz, CDCl₃, 25 °C) 133,14 (0), 121,85 (0), 117,86 (+), 32,23 (-), 30,72 (-), 28,73 (-), 15,63 (+)

## Patentansprüche (Patentansprüche für folgende(n) Vertragsstaat(en): BE, DE, FR, GB, IT, NL)

1. Verfahren zur Herstellung einer Verbindung der Formel XI 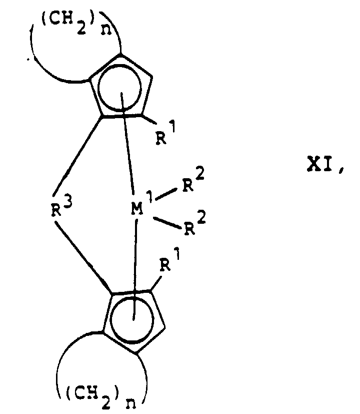 worin
M¹ ein Metall aus der Gruppe Titan, Zirkon, Hafnium, Vanadin, Niob und Tantal ist,
die Reste R¹ gleich oder verschieden sind und Wasserstoff, eine C₁-C₁₀-Alkylgruppe, eine C₆-C₁₀-Arylgruppe, eine C7-C15-Arylalkylgruppe oder eine C₂-C₁₀-Alkenylgruppe bedeuten,
die Reste R² gleich oder verschieden sind und eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ 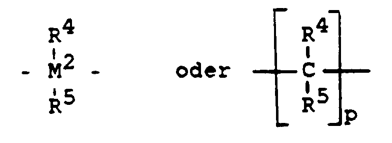 ist,
wobei M² Silizium, Germanium oder Zinn bedeutet,
R⁴ und R⁵ gleich oder verschieden sind und ein Wasserstoffatom, ein Halogenatom, eine C₁-C₁₀-Alkylgruppe, eine C₆-C₁₀-Arylgruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder
R⁴ und R⁵ zusammen mit dem sie verbindenden Atom einen Ring bilden, p 1,2 oder 3 bedeutet und
n für eine ganze Zahl von 2-18 steht,
dadurch gekennzeichnet, daß man eine Verbindung der Formel II 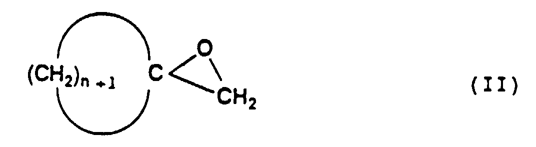 mit einem Alkali- oder Erdalkalisalz eines Malonsäureesters umsetzt, die gebildete Zwischenstufe ohne Isolierung mit einer Verbindung R¹-X zur Reaktion bringt, wobei R¹ die genannte Bedeutung besitzt und X für eine nucleophile Abgangsgruppe steht, das Reaktionsprodukt durch Decarboxylierung in ein Lacton der Formel IV überführt 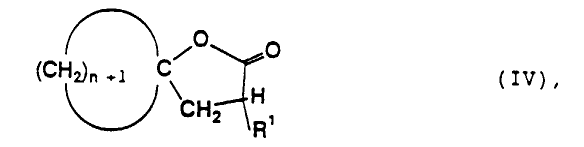 welches nach Umlagerung zum entsprechenden Enon nach bekannten Methoden zur Verbindung der Formel XI weiter umgesetzt wird.

2. Verfahren gemäß Anspruch 1, dadurch gekennzeichnet, daß in Formel XI M¹ Titan, Zirkon oder Hafnium bedeutet, die Reste R¹ gleich sind und eine C₁-C₄-Alkylgruppe bedeuten, die Reste R² gleich sind und Halogen oder eine C₁-C₄-Alkylgruppe bedeuten, M² für Silizium steht, R⁴ und R⁵ gleich oder verschieden sind und Wasserstoff oder eine C₁-C₄-Alkylgruppe bedeuten, p = 1 oder 2 ist und n für eine ganze Zahl von 4-7 steht.

3. Verfahren gemäß Anspruch 1 oder 2, dadurch gekennzeichnet, daß in Formel XI M¹ Zirkon ist, die Reste R¹ gleich sind und Methyl oder Ethyl bedeuten, die Reste R² gleich sind und Chlor oder Methyl bedeuten, M² für Silizium steht, R⁴ und R⁵ Wasserstoff oder Methyl bedeuten, p = 2 ist und n für eine ganze Zahl von 4-7 steht.

4. Verfahren gemäß einem oder mehreren der Ansprüche 1-3, dadurch gekennzeichnet, daß als Malonsäureester ein Malonsäuredi-(C₁-C₄)alkylester, bevorzugt Malonsäurediethylester, und als Alkalisalz das entsprechende Natriumsalz verwendet wird.

5. Verbindung der Formel XI gemäß Anspruch 1, wobei n ungleich 4 ist.

6. Verbindung der Formel XI gemäß Anspruch 5, dadurch gekennzeichnet, daß M¹ Titan, Zirkon oder Hafnium bedeutet, die Reste R¹ gleich sind und eine C₁-C₄-Alkylgruppe bedeuten, die Reste R² gleich sind und Halogen oder eine C₁-C₄-Alkylgruppe bedeuten, M² für Silizium steht, R⁴ und R⁵ gleich oder verschieden sind und Wasserstoff oder eine C₁-C₄-Alkylgruppe bedeuten, p = 1 oder 2 ist und n für eine ganze Zahl von 5-7 steht.

7. Verbindung der Formel XI gemäß Anspruch 5 oder 6, dadurch gekennzeichnet, daß M¹ Zirkon ist, die Reste R¹ gleich sind und Methyl oder Ethyl bedeuten, die Reste R² gleich sind und Chlor oder Methyl bedeuten, M² für Silizium steht, R⁴ und R⁵ Wasserstoff oder Methyl bedeuten, p = 2 ist und n für eine ganze Zahl von 5-7 steht.

8. Verwendung einer Verbindung der Formel XI gemäß einem oder mehreren der Ansprüche 5-7 als Katalysator für die Olefinpolymerisation.

## Patentansprüche (Patentansprüche für folgende(n) Vertragsstaat(en): ES)

1. Verfahren zur Herstellung einer Verbindung der Formel XI 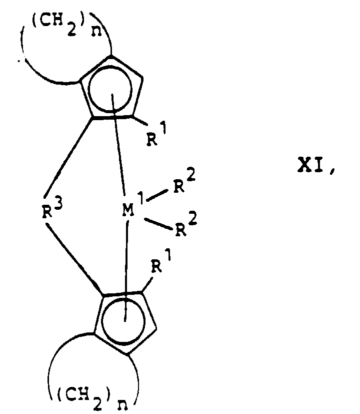 worin
M¹ ein Metall aus der Gruppe Titan, Zirkon, Hafnium, Vanadin, Niob und Tantal ist,
die Reste R¹ gleich oder verschieden sind und Wasserstoff, eine C₁-C₁₀-Alkylgruppe, eine C₆-C₁₀-Arylgruppe, eine C7-C15-Arylalkylgruppe oder eine C₂-C₁₀-Alkenylgruppe bedeuten,
die Reste R² gleich oder verschieden sind und eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ 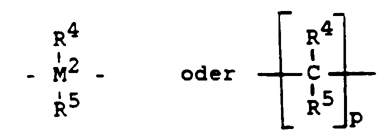 ist,
wobei M² Silizium, Germanium oder Zinn bedeutet,
R⁴ und R⁵ gleich oder verschieden sind und ein Wasserstoffatom, ein Halogenatom, eine C₁-C₁₀-Alkylgruppe, eine C₆-C₁₀-Arylgruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder
R⁴ und R⁵ zusammen mit dem sie verbindenden Atom einen Ring bilden, p 1,2 oder 3 bedeutet und
n für eine ganze Zahl von 2-18 steht,
dadurch gekennzeichnet, daß man eine Verbindung der Formel II 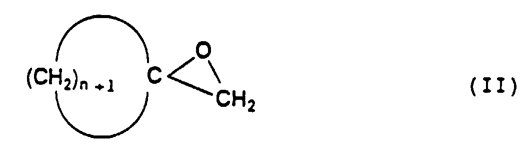 mit einem Alkali- oder Erdalkalisalz eines Malonsäureesters umsetzt, die gebildete Zwischenstufe ohne Isolierung mit einer Verbindung R¹-X zur Reaktion bringt, wobei R¹ die genannte Bedeutung besitzt und X für eine nucleophile Abgangsgruppe steht, das Reaktionsprodukt durch Decarboxylierung in ein Lacton der Formel IV überführt 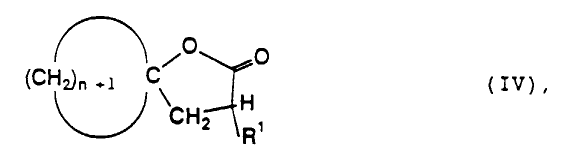 weiches nach Umlagerung zum entsprechenden Enon nach bekannten Methoden zur Verbindung der Formel XI weiter umgesetzt wird.

2. Verfahren gemäß Anspruch 1, dadurch gekennzeichnet, daß in Formel XI M¹ Titan, Zirkon oder Hafnium bedeutet, die Reste R¹ gleich sind und eine C₁-C₄-Alkylgruppe bedeuten, die Reste R² gleich sind und Halogen oder eine C₁-C₄-Alkylgruppe bedeuten, M² für Silizium steht, R⁴ und R⁵ gleich oder verschieden sind und Wasserstoff oder eine C₁-C₄-Alkylgruppe bedeuten, p = 1 oder 2 ist und n für eine ganze Zahl von 4-7 steht.

3. Verfahren gemäß Anspruch 1 oder 2, dadurch gekennzeichnet, daß in Formel XI M¹ Zirkon ist, die Reste R¹ gleich sind und Methyl oder Ethyl bedeuten, die Reste R² gleich sind und Chlor oder Methyl bedeuten, M² für Silizium steht, R⁴ und R⁵ Wasserstoff oder Methyl bedeuten, p = 2 ist und n für eine ganze Zahl von 4-7 steht.

4. Verfahren gemäß einem oder mehreren der Ansprüche 1-3, dadurch gekennzeichnet, daß als Malonsäureester ein Malonsäuredi-(C₁-C₄)alkylester, bevorzugt Malonsäurediethylester, und als Alkalisalz das entsprechende Natriumsalz verwendet wird.

5. Verwendung einer Verbindung der Formel XI gemäß einem oder mehreren der Ansprüche 1-3 als Katalysator für die Olefinpolymerisation.

## Claims (Claims for the following Contracting State(s): BE, DE, FR, GB, IT, NL)

1. A process for the preparation of a compound of the formula XI 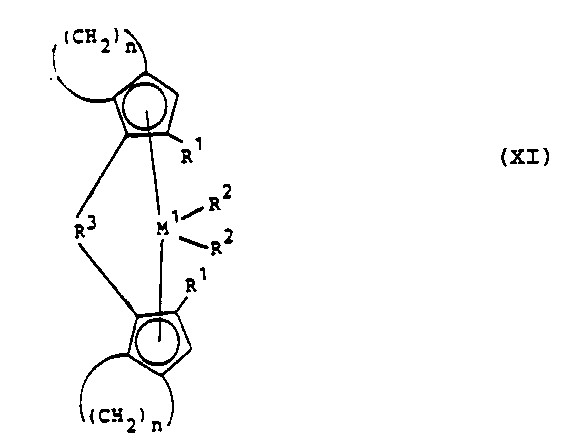 wherein
M¹ is a metal from the group consisting of titanium, zirconium, hafnium, vanadium, niobium and tantalum,
the radicals R¹ are identical or different and are hydrogen, a C₁-C₁₀-alkyl group, a C₆-C₁₀-aryl group, a C₇-C₁₅-arylalkyl group or a C₂-C₁₀-alkenyl group,
the radicals R² are identical or different and are a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-alkylaryl group, a C₇-C₄₀-alkylaryl group, a C₈-C₄₀-arylalkenyl group or a halogen atom,
R³ is 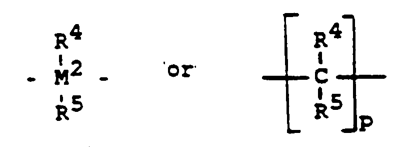 in which M² is silicon, germanium or tin,
R⁴ and R⁵ are identical or different and are a hydrogen atom, a halogen atom, a C₁-C₁₀-alkyl group, a C₆-C₁₀-aryl group, a C₂-C₁₀-alkenyl group, a C₇-C₄₀-arylalkyl group, a C₈-C₄₀-arylalkenyl group or a C₇-C₄₀-alkylaryl group or
R⁴ and R⁵, together with the atom which binds them, form a ring and p is 1, 2 or 3, and
n is an integer from 2 to 18,
wherein a compound of the formula II 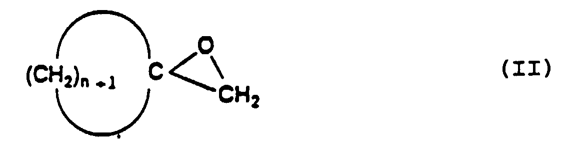 is reacted with an alkali metal or alkaline earth metal salt of a malonic ester, the intermediate formed is reacted, without isolation, with a compound R¹-X, in which R¹ has the stated meaning and X is a nucleophilic leaving group, and the reaction product is converted by decarboxylation into a lactone of the formula IV 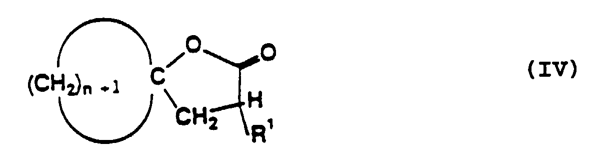 which is subjected to a rearrangement reaction to give the corresponding enone and then further reacted by known methods to give the compound of the formula XI.

2. The process as claimed in claim 1, wherein, in the formula XI, M¹ is titanium, zirconium or hafnium, the radicals R¹ are identical and are a C₁-C₄-alkyl group, the radicals R² are identical and are halogen or a C₁-C₄-alkyl group, M² is silicon, R⁴ and R⁵ are identical or different and are hydrogen or a C₁-C₄-alkyl group, p is 1 or 2 and n is an integer from 4 to 7.

3. The process as claimed in claim 1 or 2, wherein, in the formula XI, M¹ is zirconium, the radicals R¹ are identical and are methyl or ethyl, the radicals R² are identical and are chlorine or methyl, M² is silicon, R⁴ and R⁵ are hydrogen or methyl, p is 2 and n is an integer from 4 to 7.

4. The process as claimed in one or more of claims 1-3, wherein the malonic ester used is a di-(C₁-C₄)-alkyl malonate, preferably diethyl malonate, and the alkali metal salt used is the corresponding sodium salt.

5. A compound of the formula XI as claimed in claim 1, wherein n is not 4.

6. A compound of the formula XI as claimed in claim 5, wherein M¹ is titanium, zirconium or hafnium, the radicals R¹ are identical and are a C₁-C₄-alkyl group, the radicals R² are identical and are halogen or a C₁-C₄-alkyl group, M² is silicon, R⁴ and R⁵ are identical or different and are hydrogen or a C₁-C₄-alkyl group, p is 1 or 2 and n is an integer from 5 to 7.

7. A compound of the formula XI as claimed in claim 5 or 6, wherein M¹ is zirconium, the radicals R¹ are identical and are methyl or ethyl, the radicals R² are identical and are chlorine or methyl, M² is silicon, R⁴ and R⁵ are hydrogen or methyl, p is 2 and n is an integer from 5 to 7.

8. Use of a compound of the formula XI as claimed in one or more of claims 5 - 7 as a catalyst for olefin polymerization.

## Claims (Claims for the following Contracting State(s): ES)

1. A process for the preparation of a compound of the formula XI 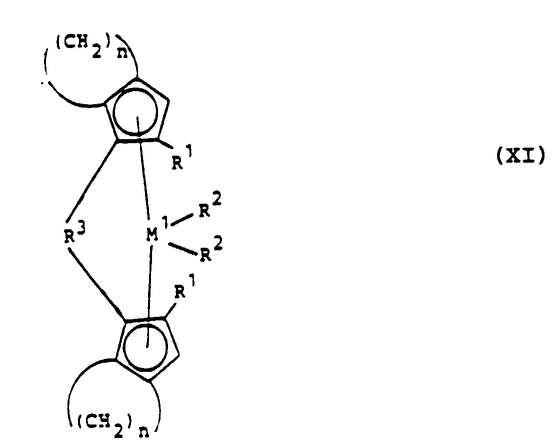 wherein
M¹ is a metal from the group consisting of titanium, zirconium, hafnium, vanadium, niobium and tantalum,
the radicals R¹ are identical or different and are hydrogen, a C₁-C₁₀-alkyl group, a C₆-C₁₀-aryl group, a C₇-C₁₅-arylalkyl group or a C₂-C₁₀-alkenyl group,
the radicals R² are identical or different and are a C₁-C_{1O}-alkyl group, a C₁-C₁₀-alkoxy group, a C₆-C₁₀-aryl group, a C₆-C₁₀-aryloxy group, a C₂-C₁₀-alkenyl group, a C₇-C₄₀-alkylaryl group, a C₇-C₄₀-alkylaryl group, a C₈-C₄₀-arylalkenyl group or a halogen atom,
R³ is 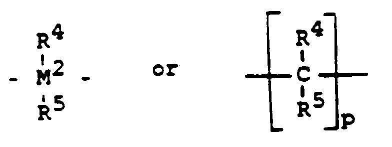 in which M² is silicon, germanium or tin,
R⁴ and R⁵ are identical or different and are a hydrogen atom, a halogen atom, a C₁-C₁₀-alkyl group, a C₆-C₁₀-aryl group, a C₂-C₁₀-alkenyl group, a C₇-C₄₀-arylalkyl group, a C₈-C₄₀-arylalkenyl group or a C₇-C₄₀-alkylaryl group or
R⁴ and R⁵, together with the atom which binds them, form a ring and p is 1, 2 or 3, and
n is an integer from 2 to 18,
wherein a compound of the formula II 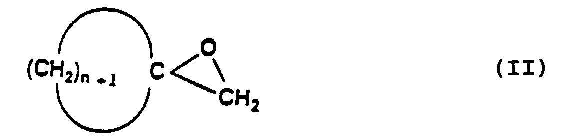 is reacted with an alkali metal or alkaline earth metal salt of a malonic ester, the intermediate formed is reacted, without isolation, with a compound R¹-X, in which R¹ has the stated meaning and X is a nucleophilic leaving group, and the reaction product is converted by decarboxylation into a lactone of the formula IV 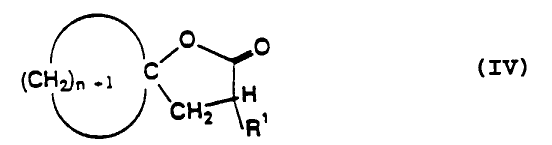 which is subjected to a rearrangement reaction to give the corresponding enone and then further reacted by known methods to give the compound of the formula XI.

2. The process as claimed in claim 1, wherein, in the formula XI, M¹ is titanium, zirconium or hafnium, the radicals R¹ are identical and are a C₁-C₄-alkyl group, the radicals R² are identical and are halogen or a C₁-C₄-alkyl group, M² is silicon, R⁴ and R⁵ are identical or different and are hydrogen or a C₁-C₄-alkyl group, p is 1 or 2 and n is an integer from 4 to 7.

3. The process as claimed in claim 1 or 2, wherein, in the formula XI, M¹ is zirconium, the radicals R¹ are identical and are methyl or ethyl, the radicals R² are identical and are chlorine or methyl, M² is silicon, R⁴ and R⁵ are hydrogen or methyl, p is 2 and n is an integer from 4 to 7.

4. The process as claimed in one or more of claims 1-3, wherein the malonic ester used is a di-(C₁-C₄)-alkyl malonate, preferably diethyl malonate, and the alkali metal salt used is the corresponding sodium salt.

5. Use of a compound of the formula XI as claimed in one or more of claims 1 - 3 as a catalyst for olefin polymerization.

## Revendications (Revendications pour l'(les) Etat(s) contractant(s) suivant(s): BE, DE, FR, GB, IT, NL)

1. Procédé pour la préparation d'un composé de formule XI 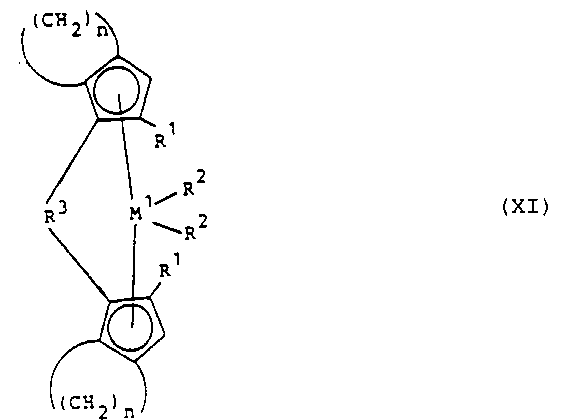 dans laquelle
M¹ est un métal pris dans le groupe comportant le titane, le zirconium, l'hafnium, le vanadium, le niobium et le tantale,
les radicaux R¹ sont identiques ou différents et représentent l'hydrogène, un groupe alkyle en C₁-C₁₀, un groupe aryle en C₆-C₁₀, un groupe arylalkyle en C₇-C₁₅ ou un groupe alcényle en C₂-C₁₀,
les radicaux R² sont identiques ou différents et représentent un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₁-C₄₀, un groupe arylalcényle en C₈-C₄₀ ou un atome d'halogène,
R³ représente 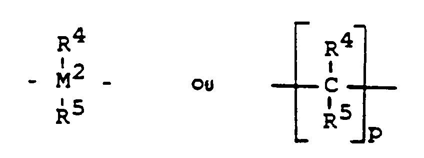
M² étant le silicium, le germanium ou l'étain,
R⁴ et R⁵ sont identiques ou différents et représentent un atome d'hydrogène, un atome d'halogène, un groupe alkyle en C₁-C₁₀, un groupe aryle en C₆-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou
R⁴ et R⁵, ensemble avec l'atome qui les relie, forment un cycle, p vaut 1, 2 ou 3 et n représente un nombre entier de 2 à 18,
caractérisé en ce que l'on fait réagir un composé de formule II 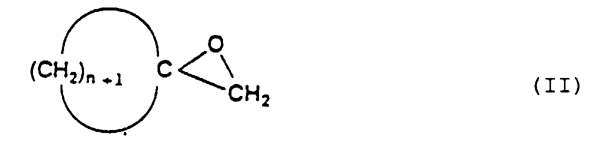 avec un sel de métal alcalin ou alcalino-terreux d'un ester de l'acide malonique, en faisant réagir sans isolement le produit intermédiaire formé avec un composé R¹-X, R¹ ayant la signification déjà donnée et X représente un groupe nucléophile éliminable, en transformant le produit de réaction par décarboxylation en une lactone de formule IV 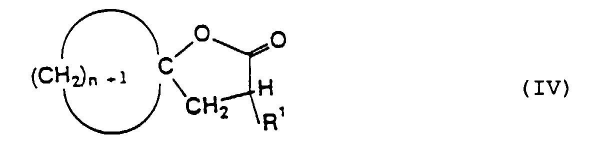 que l'on fait réagir ultérieurement, après réarrangement en l'énone selon des méthodes connues, pour obtenir le composé de formule XI.

2. Procédé selon la revendication 1, caractérisé en ce que dans la formule XI M¹ représente le titane, le zirconium ou l'hafnium, les radicaux R¹ sont identiques et représentent un groupe alkyle en C₁-C₄, les radicaux R² sont identiques et représentent halogèno ou un groupe alkyle en C₁-C₄, M² représente le silicium, R⁴ et R⁵ sont identiques ou différents et représentent l'hydrogène ou un groupe alkyle en C₁-C₄, p vaut 1 ou 2, et n est un nombre entier de 4 à 7.

3. Procédé selon la revendication 1 ou 2, caractérisé en ce que dans la formule XI M¹ est le zirconium, les radicaux R¹ sont identiques et représentent méthyle ou éthyle, les radicaux R² sont identiques et représentent le chlore ou méthyle, M² représente le silicium, R⁴ et R⁵ représentent l'hydrogène ou méthyle, p vaut 2, et n est un nombre entier de 4 à 7.

4. Procédé selon une ou plusieurs des revendications 1 à 3, caractérisé en ce que l'ester de l'acide malonique est un diester d'alkyle en C₁-C₄ de l'acide malonique, de préférence l'ester diéthylique de l'acide malonique et on utilise le sel sodique correspondant comme sel alcalin.

5. Composé de formule XI selon la revendication 1, où n n'est pas égal à 4.

6. Composé de formule XI selon la revendication 5, caractérisé en ce que M¹ représente le titane, le zirconium ou l'hafnium, les radicaux R¹ sont identiques et représentent un groupe alkyle en C₁-C₄, les radicaux R² sont identiques et représentent un halogène ou un groupe alkyle en C₁-C₄, M² représente le silicium, R⁴ et R⁵ sont identiques ou différents et représentent l'hydrogène ou un groupe alkyle en C₁-C₄, p vaut 1 ou 2, et n est un nombre entier de 5 à 7.

7. Composé de formule XI selon la revendication 5 ou 6, caractérisé en ce que M¹ est le zirconium, les radicaux R¹ sont identiques et représentent méthyle ou éthyle, les radicaux R² sont identiques et représentent le chlore ou méthyle, M² représente le silicium, R⁴ et R⁵ représentent l'hydrogène ou méthyle, p vaut 2, et n est un nombre entier de 5 à 7.

8. Utilisation d'un composé de formule XI selon une ou plusieurs des revendications 5 à 7 comme catalyseur pour la polymérisation d'oléfines.

## Revendications (Revendications pour l'(les) Etat(s) contractant(s) suivant(s): ES)

1. Procédé pour la préparation d'un composé de formule XI 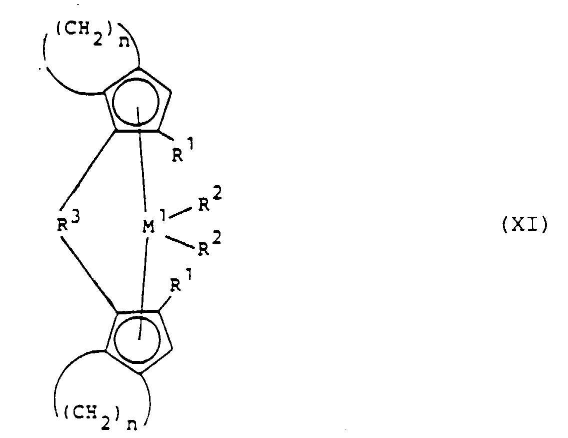 dans laquelle
M¹ est un métal pris dans le groupe comportant le titane, le zirconium, l'hafnium, le vanadium, le niobium et le tantale,
les radicaux R¹ sont identiques ou différents et représentent l'hydrogène, un groupe alkyle en C₁-C₁₀, un groupe aryle en C₆-C₁₀, un groupe arylalkyle en C₇-C₁₅ ou un groupe alcényle en C₂-C₁₀,
les radicaux R² sont identiques ou différents et représentent un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³ représente 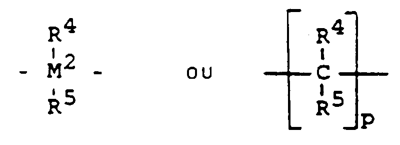
M² étant le silicium, le germanium ou l'étain,
R⁴ et R⁵ sont identiques ou différents et représentent un atome d'hydrogène, un atome d'halogène, un groupe alkyle en C₁-C₁₀, un groupe aryle en C₆-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou
R⁴ et R⁵, ensemble avec l'atome qui les relie, forment un cycle, p vaut 1, 2 ou 3 et n représente un nombre entier de 2 à 18,
caractérisé en ce que l'on fait réagir un composé de formule II 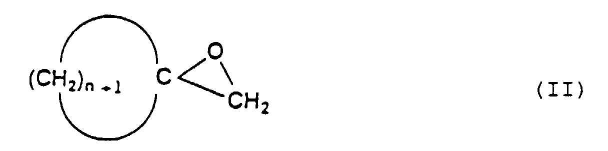 avec un sel de métal alcalin ou alcalino-terreux d'un ester d'un acide malonique, en faisant réagir sans isolement le produit intermédiaire formé avec un composé R¹-X, R¹ ayant la signification déjà donnée et X représente un groupe nucléophile éliminable, en transformant le produit de réaction par décarboxylation en une lactone de formule IV 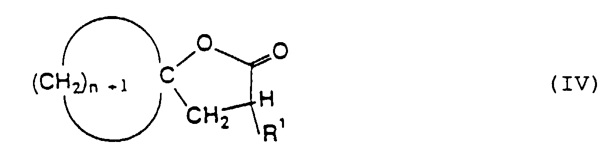 que l'on fait réagir ultérieurement, après réarrangement en l'énone selon des méthodes connues, pour obtenir le composé de formule XI.

2. Procédé selon la revendication 1, caractérisé en ce que dans la formule XI M¹ représente le titane, le zirconium ou l'hafnium, les radicaux R¹ sont identiques et représentent un groupe alkyle en C₁-C₄, les radicaux R² sont identiques et représentent halogène ou un groupe alkyle en C₁-C₄, M² représente le silicium, R⁴ et R⁵ sont identiques ou différents et représentent l'hydrogène ou un groupe alkyle en C₁-C₄, p vaut 1 ou 2, et n est un nombre entier de 4 à 7.

3. Procédé selon la revendication 1 ou 2, caractérisé en ce que dans la formule XI M¹ est le zirconium, les radicaux R¹ sont identiques et représentent méthyle ou éthyle, les radicaux R² sont identiques et représentent le chlore ou méthyle, M² représente le silicium, R⁴ et R⁵ représentent l'hydrogène ou méthyle, p vaut 2, et n est un nombre entier de 4 à 7.

4. Procédé selon une ou plusieurs des revendications 1 à 3, caractérisé en ce que l'ester de l'acide malonique est un diester d'alkyle en C₁-C₄ de l'acide malonique, de préférence l'ester diéthylique de l'acide malonique et on utilise le sel sodique correspondant comme sel alcalin.

5. Utilisation d'un composé de formule XI selon une ou plusieurs des revendications 1 à 3 comme catalyseur pour la polymérisation d'oléfines.
